# EUROPEAN PATENT APPLICATION

(11) **EP 2 960 916 A1**
(43) Date of publication of application: **30.12.2015**
(21) Application number: 14753591.8
(22) Date of filing: 21.02.2014
(51) Int. Cl.: H01H 9/18

(54) **DISPLAY DEVICE**

(30) Priority: 22.02.2013 JP 2013033501
(71) Applicant: Alps Electric Co., Ltd., Tokyo 145-8501 (JP)
(72) Inventor: IIMURE, Satoshi, Tokyo 145-8501 (JP); SATO, Takashi, Tokyo 145-8501 (JP)
(74) Representative: Klunker . Schmitt-Nilson . Hirsch
(86) International application number: PCT/JP2014/054131
(87) International publication number: WO 2014/129577

(57) **Abstract**

[Object] To provide a display device with a simple configuration that allows a representation pattern in an illumination portion to be invisible during non-illumination.

[Solution] A display device 101 includes a display panel PN1 having an illumination portion AL1 and a non-illumination portion NL1 and an illumination member SB1, disposed adjacent to a rear surface of the display panel PN1, for illuminating the illumination portion AL1. The display panel PN1 includes a light-transmissive base 19 and a light-transmissive smoke layer 13 disposed on a rear surface 19b of the base 19 adjacent to the illumination member SB1. The display panel PN1 further includes a light-shielding color layer 15 disposed on a principal surface 13m of the smoke layer 13 adjacent to the illumination member SB1. The color layer 15 has an opening 15k for defining the illumination portion AL1.

## Description

### Technical Field

The present invention relates to display devices used in operation panels for a variety of electronic equipment, and in particular, relates to a display device in which a representation pattern to be illuminated is invisible while being not illuminated.

### Background Art

Conventional operation panels for a variety of electronic equipment include input devices having a configuration in which a representation pattern, such as icons and symbols, on a display unit (display panel) is illuminated so that a user can visually identify an operation area at nighttime (or in the dark). To enhance the quality of design of a product including such an operation panel, there is need for the operation panel to allow a representation pattern to be invisible while being not illuminated, or during non-illumination, and permit the representation pattern to be visible only while being illuminated, or during illumination.

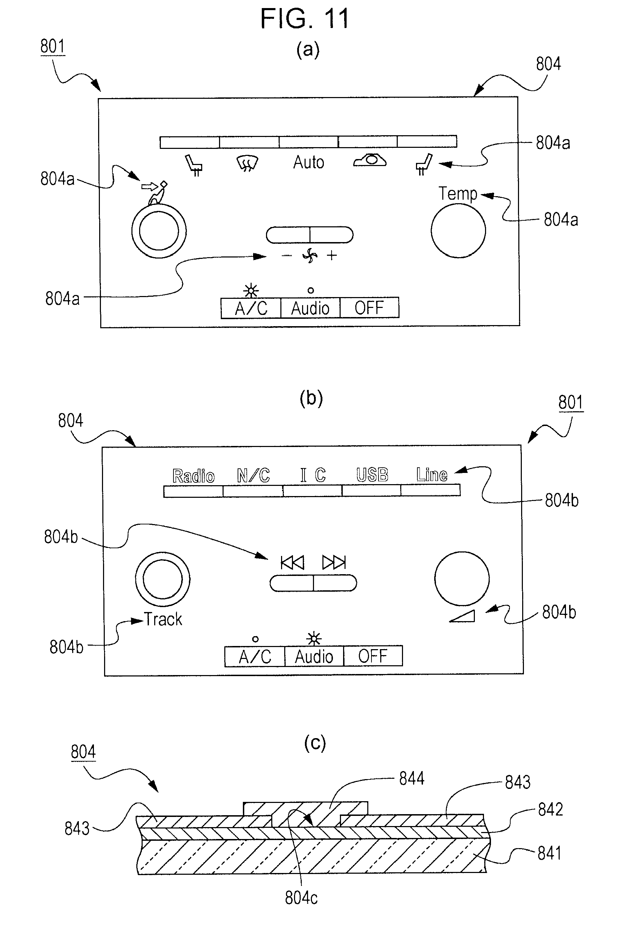

As an exemplary related art device which has met the above-described need, PTL 1 (Related Art 1) discloses an operation panel device, 801, as illustrated in Fig. 11. Fig. 11 includes diagrams illustrating the operation panel device 801. Fig. 11(a) is a front view of the operation panel device 801 in an air conditioner operation mode. Fig. 11(b) is a front view of the operation panel device 801 in an audio operation mode. Fig. 11(c) is a schematic sectional view of essential part of the configuration of a front panel 804, subjected to blackout processing, of the operation panel device 801.

The operation panel device 801 is configured as follows. In the air conditioner operation mode, as illustrated in Fig. 11(a), air conditioner representation items 804a are illuminated from behind the front panel 804 such that a representation pattern is visible. In the audio operation mode, as illustrated in Fig. 11(b), audio representation items 804b are illuminated from behind the front panel 804 such that a representation pattern is visible. The audio representation items 804b are invisible in the air conditioner operation mode, and the air conditioner representation items 804a are invisible in the audio operation mode. Such an invisible state is so-called a "blackout state". To provide the blackout state, the front panel 804 of the operation panel device 801 is subjected to blackout processing.

As illustrated in Fig. 11(c), the front panel 804 includes a light-transmissive black coating 842 (black layer) disposed on an entire rear surface of a transparent panel 841 and a light-shielding black coating 843 disposed on the black coating 842 other than an illumination area 804c (corresponding to the air conditioner representation item 804a illustrated in Fig. 11(a) or the audio representation item 804b in Fig. 11(b)). The front panel 804 further includes a light-transmissive white coating 844 (smoke layer) extending over the illumination area 804c. With such a configuration, while the illumination area 804c is being illuminated from behind, the illumination area 804c is illuminated in the same color as that of light and is visible to a user. During non-illumination, the illumination area 804c exhibits black color (dark color) similar to the color of the black coating 842 because the black coating 842 is at the front of the illumination area 804c. This prevents the illumination area 804c from being visible during non-illumination.

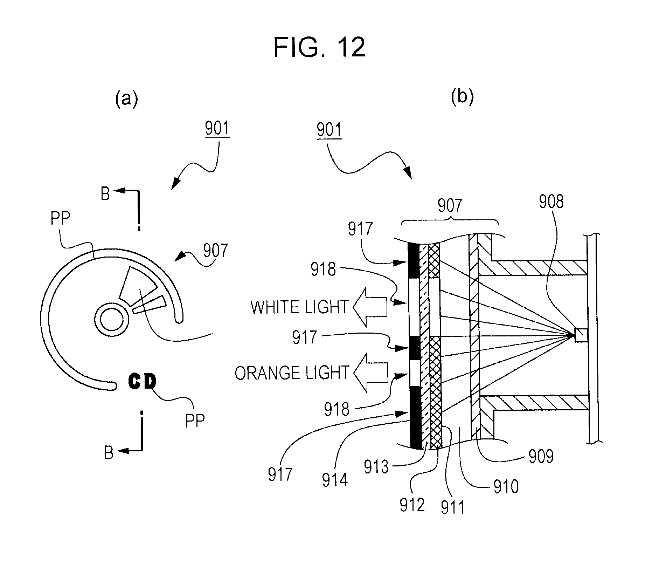

As another exemplary related art device which has met the above-described need, PTL 2 (Related Art 2) discloses a display device, 901, as illustrated in Fig. 12. Fig. 12 includes diagrams illustrating the display device 901. Fig. 12(a) is a front view of a design surface of a display panel 907 of the display device 901. Fig. 12(b) is a sectional view of the display device 901 taken along the line B-B in Fig. 12(a).

As illustrated in Fig. 12(b), the display device 901 includes the display panel 907 and a light source 908 disposed adjacent to a rear surface of the display panel 907. The display panel 907 includes a diffusion sheet 909 for diffusing light disposed so as to face the light source 908, a resin layer 910 which is transparent and has a smoky color and is disposed on a front surface of the diffusion sheet 909, and a display illumination color layer 912 such that the layers 910 and 912 sandwich an adhesive layer 911 therebetween. The display device 901 further includes a smoke layer 913 having a smoky color disposed on a front surface of the display illumination color layer 912 and a black layer 914 (black layer) disposed on a front surface of the smoke layer 913. The black layer 914 has a non-illumination region 917 in which light from the light source 908 is blocked and an illumination region 918 through which light passes. The illumination region 918 provides a representation pattern PP including characters, a figure, a picture, or the like illustrated in Fig. 12(a). With such a configuration, while the light source 908 is turned on, the representation pattern PP provided by the illumination region 918 is illuminated in the same colors as those of the illumination region 918 and is visible to a user. While the light source 908 is turned off, or during non-illumination, the smoky color of the smoke layer 913 is visible and exhibits a tint (dark color) similar to the dark color of the non-illumination region 917. This reduces the visibility of the representation pattern PP during non-illumination.

### Citation List

### Patent Literature

PTL 1: Japanese Unexamined Patent Application Publication No. 2010-64550
PTL 2: Japanese Unexamined Patent Application Publication No. 2012-148599

### Summary of Invention

### Technical Problem

In the related art (Related Art 1 and Related Art 2), the black coating 842 or the smoke layer 913 allows a representation portion (the illumination area 804c or the illumination region 918) and the other portion to be visible in dark color. It is, however, very difficult to allow a representation portion through which light passes and the other portion in which light is blocked to be visually identical to each other. Disadvantageously, a representation pattern in the representation portion (on a display panel) fails to be invisible during non-illumination.

The present invention aims to solve the above-described problem and to provide a display device with a simple configuration that allows a representation pattern in an illumination portion to be invisible during non-illumination.

### Solution to Problem

To solve the problem, the present invention provides a display device including a display panel having an illumination portion and a non-illumination portion and an illumination member disposed adjacent to a rear surface of the display panel. The illumination member illuminates the illumination portion. The display panel includes a light-transmissive base and a light-transmissive smoke layer disposed on a rear surface of the base adjacent to the illumination member. The display panel further includes a light-shielding color layer disposed on a principal surface of the smoke layer adjacent to the illumination member. The color layer has an opening for defining the illumination portion.

In the display device according to the present invention, the smoke layer disposed on the rear surface of the base of the display panel allows a background color of the illumination portion and the non-illumination portion to be very uniform, and can scatter light entering the smoke layer. This enables a boundary between the illumination portion and the non-illumination portion to be very invisible to a user. Additionally, the color layer, which is not black, disposed on the principal surface of the smoke layer adjacent to the illumination member allows light reflected by an interface between the smoke layer and the color layer in the non-illumination portion during non-illumination to be visible to the user. Adjusting the color tone of the color layer, therefore, controls the light reflected by the interface, so that the color tones of the illumination and non-illumination portions which are viewed by the user can be close to each other. Furthermore, adjusting the color tone of the smoke layer controls light passing through the smoke layer, so that the color tones of the illumination and non-illumination portions which are viewed by the user can be closer to each other. Consequently, a state in which the outline of the illumination portion is invisible during non-illumination can be achieved. Thus, the display device with a simple configuration that allows a representation pattern in the illumination portion to be invisible during non-illumination can be provided.

In the display device according to the present invention, the display panel may further include a light-shielding black layer disposed on a principal surface of the color layer adjacent to the illumination member.

In this configuration, the black layer can block light from the illumination member. This can reliably prevent transmission of light to the non-illumination portion during illumination. If the color layer has a defect, such as a pinhole, the transmission of light to the non-illumination portion can be prevented. This enables the illumination portion to be distinctly different from the non-illumination portion during illumination, thus enhancing the quality of design of a product including the display device.

In the display device according to the present invention, the smoke layer may have a transmittance greater than or equal to 1%.

In this configuration, light passing through the illumination portion can be increased in amount. This enables a representation pattern in the illumination portion to be very bright and visible to a user during illumination. If illumination is performed so as to provide constant brightness to be visible, the luminance of the illumination member to be selected can be set to a low level because the smoke layer has a high transmittance, resulting in power saving of the display device.

In the display device according to the present invention, the illumination member may include a light-emitting light source directly illuminating the illumination portion.

In this configuration, the illumination portion can be directly illuminated during illumination, thus enabling a representation pattern to appear more brightly.

In the display device according to the present invention, the illumination member may include a light-emitting light source and a light guide having a light entrance portion through which light from the light-emitting light source enters.

In this configuration, light from the light-emitting light source can be efficiently guided to the illumination portion during illumination. Consequently, the illumination portion can be illuminated uniformly, thus enhancing the quality of design of a product including the display device.

### Advantageous Effects of Invention

In the display device according to the present invention, the smoke layer disposed on the rear surface of the base of the display panel allows the background color of the illumination portion and the non-illumination portion to be very uniform, and can scatter light entering the smoke layer. This enables the boundary between the illumination portion and the non-illumination portion to be very invisible to the user. Additionally, the color layer, which is not black, disposed on the principal surface of the smoke layer adjacent to the illumination member allows light reflected by the interface between the smoke layer and the color layer in the non-illumination portion during non-illumination to be visible to the user. Adjusting the color tone of the color layer, therefore, controls the light reflected by the interface, so that the color tones of the illumination and non-illumination portions which are viewed by the user can be close to each other. Furthermore, adjusting the color tone of the smoke layer controls light passing through the smoke layer, so that the color tones of the illumination and non-illumination portions which are viewed by the user can be closer to each other. Consequently, a state in which the outline of the illumination portion is invisible during non-illumination can be achieved. Thus, the display device with such a simple configuration that allows a representation pattern in the illumination portion to be invisible during non-illumination can be provided.

### Brief Description of Drawings

[Fig. 1] Fig. 1 is a diagram illustrating a display device according to a first embodiment of the present invention and is a perspective view of an in-vehicle panel unit including the display device.
[Fig. 2] Fig. 2 includes configuration diagrams illustrating the display device according to the first embodiment of the present invention, Fig. 2(a) is a front view of the display device in an "audio operation mode", and Fig. 2(b) is a front view of the display device in an "air conditioner operation mode".
[Fig. 3] Fig. 3 is a sectional structural view illustrating the display device according to the first embodiment of the present invention.
[Fig. 4] Fig. 4 is a diagram illustrating the display device according to the first embodiment of the present invention and is a sectional structural view illustrating exemplary light paths in the display device.
[Fig. 5] Fig. 5 is a diagram illustrating the display device according to the first embodiment of the present invention and is a sectional structural view illustrating exemplary light paths in the display device.
[Fig. 6] Fig. 6 is a sectional structural view illustrating a display device according to a second embodiment of the present invention.
[Fig. 7] Fig. 7 is a diagram illustrating the display device according to the second embodiment of the present invention and is a sectional structural view illustrating exemplary light paths in the display device.
[Fig. 8] Fig. 8 is a diagram illustrating a display device according to the second embodiment of the present invention and is a sectional structural view illustrating exemplary light paths in the display device.
[Fig. 9] Fig. 9 is a diagram illustrating a display device according to Modification 1 of the embodiments of the present invention and is a sectional structural view of a display panel.
[Fig. 10] Fig. 10 is a sectional structural view illustrating a display device according to Modification 2 of the embodiments of the present invention.
[Fig. 11] Fig. 11 includes diagrams illustrating an operation panel device in Related Art 1, Fig. 11(a) is a front view of the operation panel device in an air conditioner operation mode, Fig. 11(b) is a front view of the operation panel device in an audio operation mode, and Fig. 11(c) is a schematic sectional view of essential part of a front panel subjected to blackout processing in the operation panel device.
[Fig. 12] Fig. 12 includes diagrams illustrating a display device in Related Art 2, Fig. 12(a) is a front view of a design surface of a display panel of the display device, and Fig. 12(b) is a sectional view of the display device taken along the line B-B in Fig. 12(a).

### Description of Embodiments

Embodiments of the present invention will be described below with reference to the drawings.

### [First Embodiment]

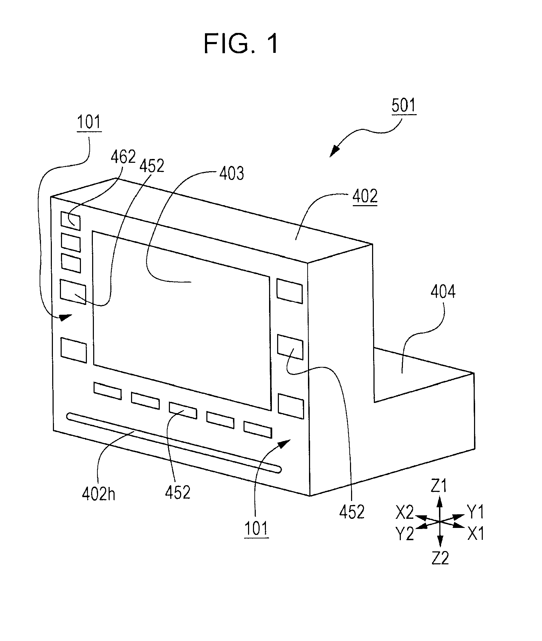

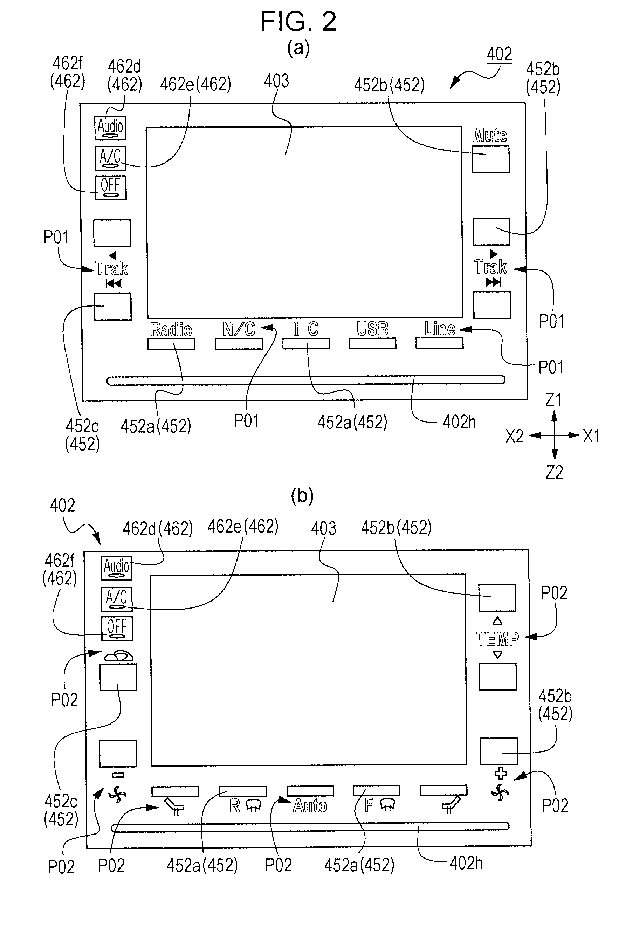

Fig. 1 is a diagram illustrating a display device 101 according to a first embodiment of the present invention and is a perspective view of an in-vehicle panel unit 501 including the display device 101. Fig. 2 includes configuration diagrams illustrating the display device 101 according to the first embodiment of the present invention. Fig. 2(a) is a front view of the display device 101 in an "audio operation mode". Fig. 2(b) is a front view of the display device 101 in an "air conditioner operation mode". In Fig. 1, a representation pattern P01 and a representation pattern P02 are omitted.

The display device 101 according to the first embodiment of the present invention is included in the in-vehicle panel unit 501 illustrated in Fig. 1, for example. As illustrated in Fig. 1, the in-vehicle panel unit 501 mainly includes an operation panel device 402 including the display device 101, a liquid crystal display 403 disposed in the middle of the operation panel device 402, and a car audio device 404 into which a medium, such as a CD or a DVD, is loaded through an insertion hole 402h of the operation panel device 402.

As illustrated in Figs. 1 and 2, the operation panel device 402 further has multipurpose operation buttons 452 and dedicated operation buttons 462 in addition to the insertion hole 402h such that these buttons are exposed at several positions. The multipurpose operation buttons 452 and the dedicated operation buttons 462 are arranged in openings (not illustrated) of a front panel. Specifically, five multipurpose operation buttons 452a which can be pressed are arranged in a row and exposed in lower part (adjacent to an end in a Z2 direction illustrated in Fig. 2) of the front panel of the operation panel device 402, and three multipurpose operation buttons 452b which can be pressed are arranged in a column and exposed in right part (adjacent to an end in an X1 direction in Fig. 2) of the front panel. In addition, two multipurpose operation buttons 452c which can be pressed are arranged vertically and exposed in left part (adjacent to an end in an X2 direction in Fig. 2) of the front panel and adjacent to the lower part (adjacent to the end in the Z2 direction in Fig. 2) of the front panel. A dedicated operation button 462d for mode switching, a dedicated operation button 462e for mode switching, and a dedicated operation button 462f which can be pressed are arranged in a column and exposed in the left part (adjacent to the end in the X2 direction in Fig. 2) of the front panel and adjacent to upper part (adjacent to an end in a Z1 direction in Fig. 2) of the front panel.

The mode can be selectively switched between the "audio operation mode" and the "air conditioner operation mode" by pressing the dedicated operation button 462d ("Audio" in Fig. 2) or the dedicated operation button 462e ("A/C" in Fig. 2) in the operation panel device 402. While the "audio operation mode" is selected, the multipurpose operation buttons 452 (452a, 452b, and 452c) each function as an audio operation button. While the "air conditioner operation mode" is selected, the multipurpose operation buttons 452 (452a, 452b, and 452c) each function as an air conditioner operation button. The dedicated operation button 462f ("OFF" in Fig. 2) is used to stop an operation in the selected operation mode.

When the "audio operation mode" is established in response to pressing the dedicated operation button 462d, the representation pattern P01, such as various characters and pictures, is illuminated from behind the front panel and is accordingly visible as illustrated in Fig. 2(a). Similarly, when the "air conditioner operation mode" is established in response to pressing the dedicated operation button 462e, the representation pattern P01, which has been visible in the "audio operation mode", is invisible (in a blackout state) and the representation pattern P02, such as various characters and pictures, for the "air conditioner operation mode" is illuminated from behind the front panel and is accordingly visible as illustrated in Fig. 2(b). While the operation mode is being stopped after pressing of the dedicated operation button 462f, both of the representation pattern P01 and the representation pattern P02 are in the blackout state and are accordingly invisible. The display device 101 according to the first embodiment of the present invention is used as such a front panel.

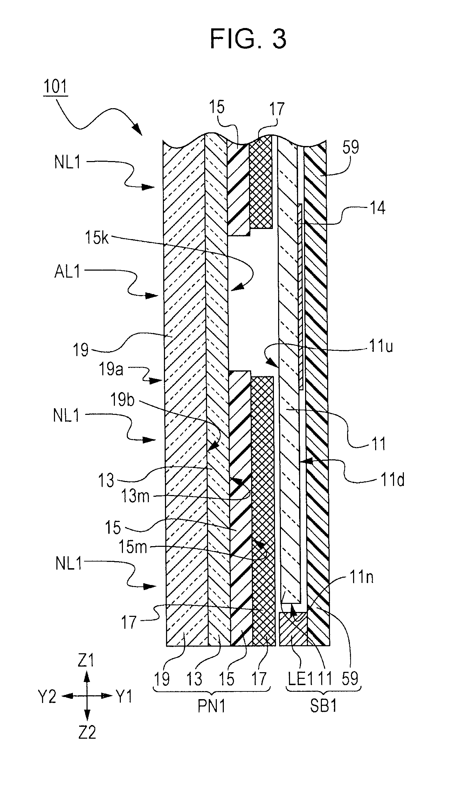

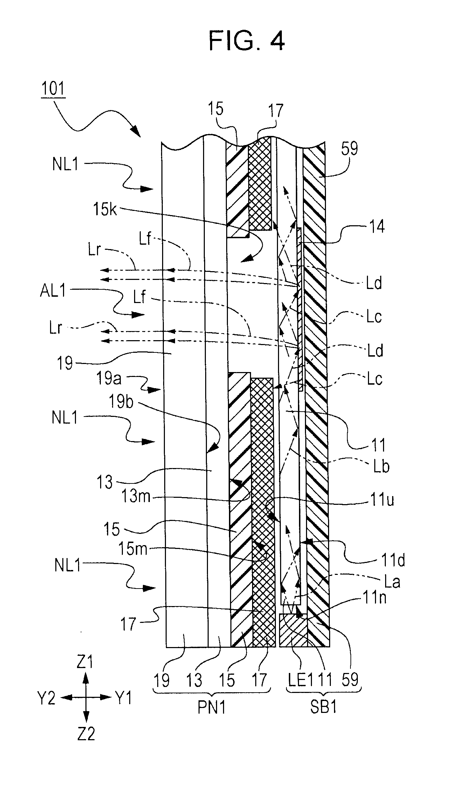

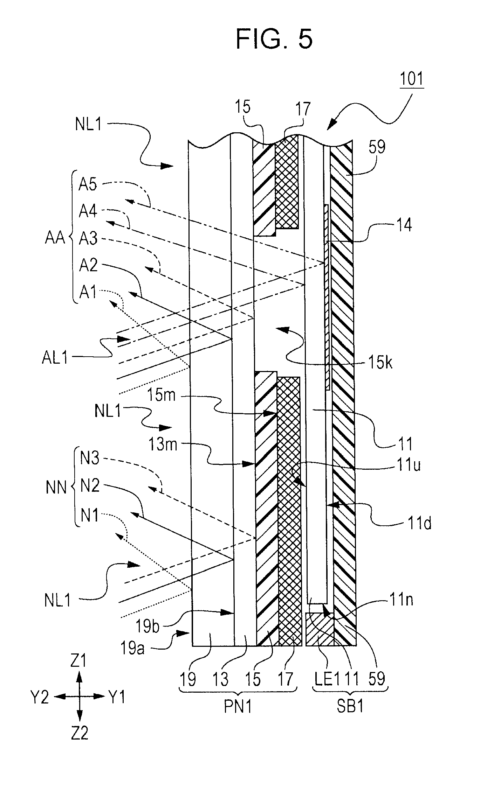

Fig. 3 is a sectional structural view illustrating the display device 101 according to the first embodiment of the present invention. For the convenience of description, Fig. 3 schematically illustrates part of the display device 101 and is not drawn to scale. Fig. 4 is a diagram illustrating the display device 101 according to the first embodiment of the present invention and is a sectional structural view illustrating exemplary light paths in the display device 101. Fig. 5 is a diagram illustrating the display device 101 according to the first embodiment of the present invention and is a sectional structural view illustrating exemplary light paths in the display device 101. Fig. 4 illustrates a state in which an illumination member SB1 is turned on. Fig. 5 illustrates a state in which the illumination member SB1 is turned off. For the convenience of description, hatching is partly omitted in the section of Figs. 4 and 5.

As illustrated in Fig. 3, the display device 101 according to the first embodiment of the present invention includes a display panel PN1 having an illumination portion AL1 and a non-illumination portion NL1 which are viewed by a user, a light guide 11, and a light-emitting light source LE1. The light guide 11 and the light-emitting light source LE1 are included in the illumination member SB1 for illuminating the illumination portion AL1. The display panel PN1 in the first embodiment of the present invention functions as the front panel of the above-described operation panel device 402 and has the insertion hole 402h and the openings for the operation buttons as illustrated in Figs. 1 and 2. In Fig. 3, the insertion hole 402h and the openings for the operation buttons are not illustrated. Fig. 3 illustrates only essential components of the display device 101.

As illustrated in Fig. 3, the display panel PN1 includes a light-transmissive base 19, a smoke layer 13 disposed on a rear surface 19b of the base 19 adjacent to the illumination member SB1 (or facing in a Y1 direction illustrated in Fig. 3), a color layer 15 disposed on a principal surface 13m of the smoke layer 13 adjacent to the illumination member SB1, and a black layer 17 disposed on a principal surface 15m of the color layer 15 adjacent to the illumination member SB1.

The base 19 is composed of colorless light-transmissive polycarbonate synthetic resin. As illustrated in Fig. 3, the base 19 is plate-shaped. One surface of the base 19, or a front surface 19a thereof is viewed by the user. Although the polycarbonate resin is used as a synthetic resin material, any other resin, such as acrylic resin, polyurethane resin, or silicone resin, may be used.

The smoke layer 13 is composed of grayish light-transmissive acrylic synthetic resin. Referring to Fig. 3, the smoke layer 13 is disposed on the entire rear surface 19b of the base 19. The smoke layer 13 has a function of diffusing incoming light. The smoke layer 13 allows light incident thereon to emerge uniformly therefrom and enables a boundary between the illumination portion AL1 and the non-illumination portion NL1 to become unclear. In addition, the smoke layer 13 has a function of adjusting the color tone of light passing through the smoke layer 13. Adjusting the color tone of the smoke layer 13 enables the color tones of the non-illumination and illumination portions NL1 and AL1 which are viewed by the user to be close to each other.

The smoke layer 13 has a transmittance greater than or equal to 1%. Particularly, in the first embodiment of the present invention, the smoke layer 13 is allowed to have a transmittance of approximately 10%. Thus, the smoke layer 13 permits the transmission of more light than the white coating 844 (smoke layer) in Related Art 1 and the smoke layer 913 in Related Art 2 in which a typical transmittance is set to 1% or less. Consequently, the representation pattern (P01 or P02 in Fig. 2) in the illumination portion AL1 is very bright and visible to the user during illumination. If illumination is performed so as to provide constant brightness to be visible, the luminance of the illumination member SB1 to be selected can be set to a low level because the smoke layer 13 has a higher transmittance than Related Art 1 and Related Art 2.

The color layer 15 is grayish similar to the color of the smoke layer 13 and is composed of light-shielding acrylic synthetic resin. Referring to Fig. 3, the color layer 15 is disposed on the principal surface 13m of the smoke layer 13. The color layer 15 has a portion that is not disposed on the principal surface 13m of the smoke layer 13, i.e., an opening 15k as illustrated in Fig. 3. Referring to Fig. 4, applied light Lf from the illumination member SB1 passes through the opening 15k, further passes through the smoke layer 13 and the base 19, and emerges as radiated light Lr from the front surface 19a of the base 19. The radiated light Lr is visually identified by the user. Specifically, the opening 15k defines the illumination portion AL1 and the color layer 15 other than the opening 15k blocks the applied light Lf from the illumination member SB1. Accordingly, the color layer 15 other than the opening 15k defines the non-illumination portion NL1.

As described above, the smoke layer 13 is disposed on a front surface of the color layer 15 defining the illumination portion AL1 and the non-illumination portion NL1. This allows a background color of the illumination portion AL1 and the non-illumination portion NL1 to be very uniform. This enables the boundary between the illumination portion AL1 and the non-illumination portion NL1 to be very invisible to the user.

The tint of the smoke layer 13 is adjusted so that visible light AA (illustrated in Fig. 5) and visible light NN (illustrated in Fig. 5), which are visible to the user, are similar in color difference to each other during non-illumination. Specifically, referring to Fig. 5, light components which do not pass through the smoke layer 13, i.e., a reflected light component A1 and a reflected light component N1 have the same intensity and tint and a reflected light component A2 and a reflected light component N2 have the same intensity and tint. On the other hand, other light components which pass through the smoke layer 13, i.e., reflected light components (N3, A3, A4, and A5) have different intensities and tints. Accordingly, adjusting the tint of the smoke layer 13 causes the visible light AA and the visible light NN to be similar in color difference to each other. Specifically, the tint of the smoke layer 13 is adjusted so that light obtained by combining the reflected light components A3, A4, and A5 is similar to the reflected light component N3. The smoke layer 13 is adjusted mainly in hue and saturation.

Furthermore, the tint of the color layer 15 is adjusted so that the visible light AA (illustrated in Fig. 5) and the visible light NN (illustrated in Fig. 5), which are visible to the user, are similar in color difference to each other during non-illumination. Specifically, referring to Fig. 5, the reflected light components A1 and N1 reflected by the front surface 19a of the base 19 have the same intensity and tint and the reflected light components A2 and N2 reflected by the rear surface 19b of the base 19 have the same intensity and tint. On the other hand, the other reflected light components (N3, A3, A4, and A5) have different intensities and tints. Accordingly, controlling the reflected light component N3 reflected by an interface between the smoke layer 13 and the color layer 15 causes the visible light AA and the visible light NN to be similar in color difference to each other. Specifically, the tint of the color layer 15 is adjusted so that light obtained by combining the reflected light components A3, A4, and A5 is similar to the reflected light component N3. The color layer 15 is adjusted mainly in lightness.

Consequently, the color tones of the non-illumination and illumination portions NL1 and AL1 during non-illumination can be close to each other, thus achieving a state in which the outline of the illumination portion AL1 is invisible during non-illumination. In the first embodiment of the present invention, only the display panel PN1 which is blackish and in which the representation patterns P01 and P02 are invisible is viewed during non-illumination, whereas the display panel PN1 which is blackish and in which the representation pattern P01 or P02 is visible is viewed during illumination.

The smoke layer 13 can be readily formed by applying dimming ink, prepared by mixing pigment, a diffusing agent, acrylic resin, and a solvent, to the entire rear surface 19b of the base 19 with a screen printing plate, and drying and solidifying the ink.

In addition, the color layer 15 can be readily formed by applying dimming ink, prepared by mixing pigment, acrylic resin, and a solvent, to the principal surface 13m of the smoke layer 13 with a screen printing plate, and drying and solidifying the ink.

The black layer 17 is composed of black light-shielding acrylic synthetic resin. Referring to Fig. 3, the black layer 17 is disposed on the principal surface 15m of the color layer 15. The black layer 17 reliably blocks the applied light Lf from the illumination member SB1. This can reliably prevent transmission of the applied light Lf to the non-illumination portion NL1 during illumination. If the color layer 15 has a defect, such as a pinhole, the transmission of the applied light Lf to the non-illumination portion NL1 can be reliably prevented.

The black layer 17 can be readily formed by applying black ink, prepared by mixing carbon powder, acrylic resin, and a solvent, to the principal surface 15m of the color layer 15 with a screen printing plate, and drying and solidifying the ink.

As illustrated in Figs. 3 and 4, the illumination member SB1 includes the light-emitting light source LE1 and the light guide 11 having a light entrance portion 11n through which light from the light-emitting light source LE1 enters. The illumination member SB1 is disposed adjacent to a rear surface of the display panel PN1.

The light guide 11 is flat and plate-shaped and is composed of light-transmissive polycarbonate synthetic resin as a base material. Referring to Figs. 3 and 4, the light guide 11 is disposed so as to face the display panel PN1. A scattering layer 14 is disposed on a rear surface 11d of the light guide 11 opposite a front surface 11u thereof facing the display panel PN1 such that the scattering layer 14 is positioned so as to correspond to the illumination portion AL1. The light guide 11 has at one end the light entrance portion 11n through which light from the light-emitting light source LE1 enters. Referring to Fig. 4, light La enters through the light entrance portion 11n and propagates through the light guide 11 while being repeatedly reflected by an interface between the front surface 11u of the light guide 11 and air and an interface between the rear surface 11d thereof and air. Although polycarbonate resin is used as a synthetic resin material, any other resin, such as acrylic resin, polyurethane resin, or silicone resin, may be used.

The scattering layer 14 is composed of a crystalline material having a grain boundary that reflects light in the layer, or alternatively, a material containing an intended material to cause a change of a light traveling path in the layer. For example, intended material powder, such as titanium dioxide, zirconium dioxide (zirconia), magnesium oxide, or calcium carbonate, may be used. Referring to Fig. 4, when part of light Lb propagating through the light guide 11 reaches the scattering layer 14, the scattering layer 14 scatters and reflects light Lc, which has reached the scattering layer 14, to the front surface (facing in a Y2 direction in Fig. 4) of the light guide 11, thus producing reflected scattered light Ld. The applied light Lf, which corresponds to part of the reflected scattered light Ld and has reached the opening 15k of the color layer 15, passes through the smoke layer 13 and the base 19, and emerges as the radiated light Lr from the front surface 19a of the base 19. Consequently, when the user at a position in front of (or in the Y2 direction in Fig. 1 relative to) the display device 101 views the display device 101, the user can visually identify the radiated light Lr and thus identify the representation pattern P01 and the representation pattern P02 illuminated by the light.

As regards the light-emitting light source LE1, a side-emitting type light emitting diode (LED) can be used. The light-emitting light source LE1 is mounted on, for example, a printing wiring board 59. As illustrated in Fig. 3, the light-emitting light source LE1 is positioned so as to face the light entrance portion 11n and a light emitting surface of the light-emitting light source LE1 is directed such that emitted light can enter the light entrance portion 11n. Since the light-emitting light source LE1 is disposed in one side part of the display device 101 such that light emitted from the light-emitting light source LE1 propagates through the light guide 11 as described above, the display device 101 can be reduced in thickness and light from the light-emitting light source LE1 can be efficiently guided to the illumination portion AL1 during illumination.

As described above, in the display device 101 according to the first embodiment of the present invention, the smoke layer 13 disposed on the rear surface 19b of the base 19 of the display panel PN1 of the display device 101 according to the present invention allows the background color of the illumination portion AL1 and the non-illumination portion NL1 to be very uniform. This enables the boundary between the illumination portion AL1 and the non-illumination portion NL1 to be very invisible to the user. In addition, the color layer 15, which is not black, disposed on the principal surface 13m of the smoke layer 13 adjacent to the illumination member SB1 allows the reflected light component N3 reflected by the interface between the smoke layer 13 and the color layer 15 in the non-illumination portion NL1 to be visible to the user during non-illumination. Accordingly, adjusting the color tone of the color layer 15 controls the reflected light component N3 at the interface, so that the color tones of the non-illumination and illumination portions NL1 and AL1 which are viewed by the user can be close to each other. In addition, adjusting the color tone of the smoke layer 13 controls light passing through the smoke layer 13, so that the color tones of the non-illumination and illumination portions NL1 and AL1 which are viewed by the user can be closer to each other. Consequently, a state in which the outline of the illumination portion AL1 is invisible during non-illumination can be achieved. Thus, the display device 101 with such a simple configuration that allows the representation pattern (P01 or P02 in Fig. 2, for example) in the illumination portion AL1 to be invisible during non-illumination can be provided.

Since the light-shielding black layer 17 is disposed on the principal surface 15m of the color layer 15 adjacent to the illumination member SB1, the black layer 17 can reliably block the applied light Lf from the illumination member SB1. This can reliably prevent the transmission of the applied light Lf to the non-illumination portion NL1 during illumination. If the color layer 15 has a defect, such as a pinhole, the transmission of the applied light Lf to the non-illumination portion NL1 can be prevented. This enables the illumination portion AL1 to be distinctly different from the non-illumination portion NL1 during illumination, thus enhancing the quality of design of the product including the display device 101.

Since the smoke layer 13 has a transmittance greater than or equal to 1%, the applied light Lf passing through the illumination portion AL1 can be increased in amount. Thus, the representation pattern (P01 or P02 in Fig. 2) in the illumination portion AL1 is very bright and visible to the user during illumination. If illumination is performed so as to provide constant brightness to be visible, the luminance of the illumination member SB1 to be selected can be set to a low level because the smoke layer 13 has a high transmittance, resulting in power saving of the display device 101.

Since the illumination member SB1 includes the light-emitting light source LE1 and the light guide 11 having the light entrance portion 11n through which light from the light-emitting light source LE1 enters, light from the light-emitting light source LE1 can be efficiently guided to the illumination portion AL1 during illumination. This enables the illumination portion AL1 to be illuminated uniformly, thus increasing the quality of the product including the display device 101.

In the above-described first embodiment, the case where the display device 101 is included in the in-vehicle panel unit 501 is described. The display device 101 may be included in any other electrical unit other than an in-vehicle unit, for example, a portable unit.

### [Second Embodiment]

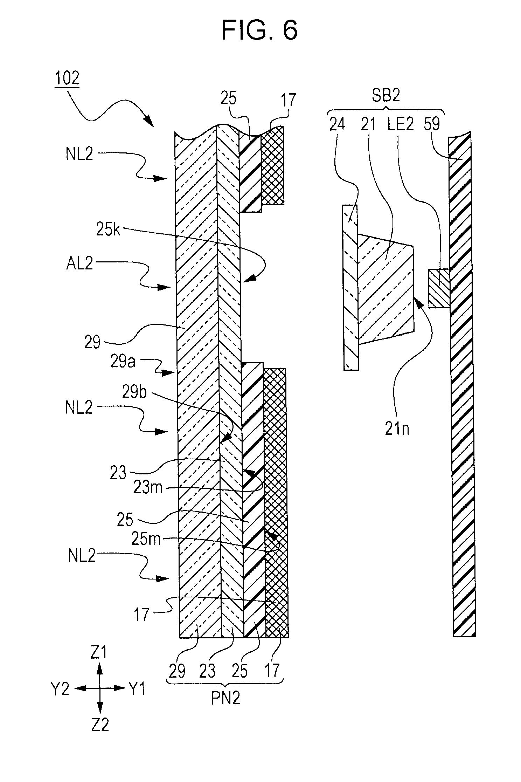

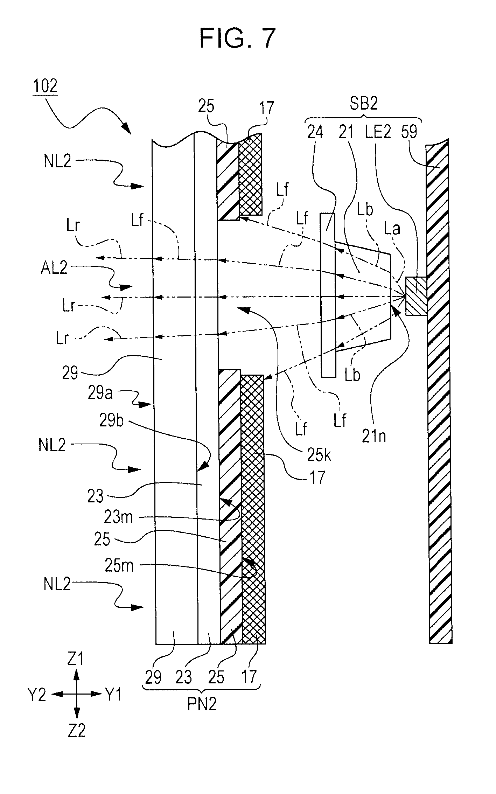

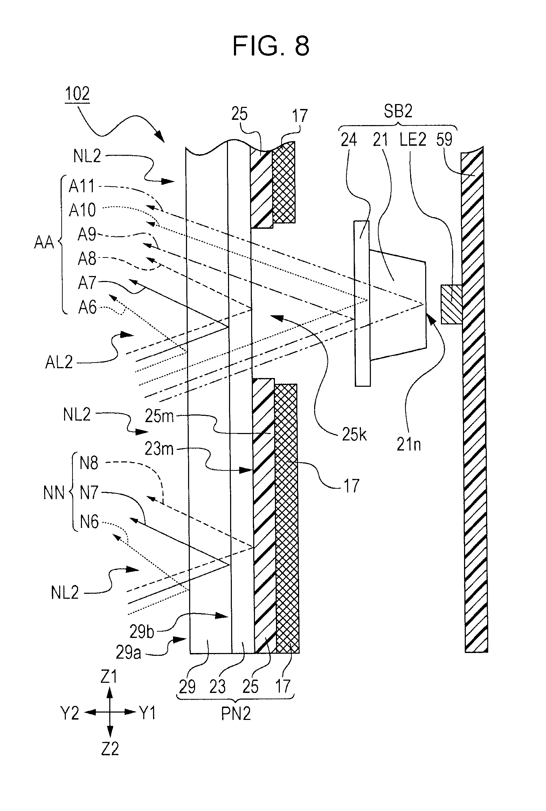

Fig. 6 is a sectional structural view illustrating a display device 102 according to a second embodiment of the present invention. Fig. 7 is a diagram illustrating the display device according to the second embodiment of the present invention and is a side structural view illustrating exemplary light paths in the display device. Fig. 7 illustrates a state in which an illumination member SB2 is turned on. Fig. 8 is a diagram illustrating the display device 102 according to the second embodiment of the present invention and is a side structural view illustrating exemplary light paths in the display device 102. Fig. 8 illustrates a state in which the illumination member SB2 is turned off. For the convenience of description, hatching is partly omitted in the section of Figs. 7 and 8. The display device 102 according to the second embodiment differs from the first embodiment in the configuration of the illumination member SB2. The same components as those in the first embodiment are designated by the same reference numerals and a detailed description of these components is omitted.

As illustrated in Fig. 6, the display device 102 according to the second embodiment of the present invention includes a display panel PN2 having an illumination portion AL2 and a non-illumination portion NL2 which are viewed by the user, a light guide 21, and a light-emitting light source LE2. The light guide 21 and the light-emitting light source LE2 are included in the illumination member SB2 for illuminating the illumination portion AL2.

As illustrated in Fig. 6, the display panel PN2 includes a light-transmissive base 29, a smoke layer 23 disposed on a rear surface 29b of the base 29 adjacent to the illumination member SB2 {or facing in the Y1 direction in Fig. 6}, a color layer 25 disposed on a principal surface 23m of the smoke layer 23 adjacent to the illumination member SB2, and a black layer 17 disposed on a principal surface 25m of the color layer 25 adjacent to the illumination member SB2.

The base 29 is composed of colorless light-transmissive polycarbonate synthetic resin. As illustrated in Fig. 6, the base 29 is plate-shaped. One surface of the base 29, or a front surface 29a thereof is viewed by the user. Although the polycarbonate resin is used as a synthetic resin material, any other resin, such as acrylic resin, polyurethane resin, or silicone resin, may be used. In the second embodiment of the present invention, a silverish color is selected as a color suitable to the base 29.

The smoke layer 23 is composed of whitish light-transmissive acrylic synthetic resin. Referring to Fig. 3, the smoke layer 23 is disposed on the entire rear surface 29b of the base 29. The smoke layer 23 has a function of diffusing incoming light. The smoke layer 23 allows light incident thereon to emerge uniformly therefrom and enables a boundary between the illumination portion AL2 and the non-illumination portion NL2 to become unclear. In addition, the smoke layer 23 has a function of adjusting the color tone of light passing through the smoke layer 23. Adjusting the color tone of the smoke layer 23 enables the color tones of the non-illumination and illumination portions NL2 and AL2 which are viewed by the user to be close to each other.

The smoke layer 23 has a transmittance greater than or equal to 1%. Particularly, in the second embodiment of the present invention, the smoke layer 23 is allowed to have a transmittance of approximately 7%. Thus, the smoke layer 23 permits transmission of more light than the white coating 844 (smoke layer) in Related Art 1 and the smoke layer 913 in Related Art 2 in which a typical transmittance is set to 1% or less. Consequently, a representation pattern in the illumination portion AL2 is very bright and visible to the user during illumination. If illumination is performed so as to provide constant brightness to be visible, the luminance of the illumination member SB2 to be selected can be set to a low level because the smoke layer 23 has a higher transmittance than Related Art 1 and Related Art 2.

The color layer 25 is composed of silverish light-shielding polyester synthetic resin. Referring to Fig. 6, the color layer 25 is disposed on the principal surface 23m of the smoke layer 23. The color layer 25 has a portion that is not disposed on the principal surface 23m of the smoke layer 23, i.e., an opening 25k as illustrated in Fig. 6. Referring to Fig. 7, applied light Lf from the illumination member SB2 passes through the opening 25k, further passes through the smoke layer 23 and the base 29, and emerges as radiated light Lr from the front surface 29a of the base 29. The radiated light Lr is visually identified by the user. In other words, the opening 25k defines the illumination portion AL2 and the color layer 25 other than the opening 25k blocks the applied light Lf from the illumination member SB2. Accordingly, the color layer 25 other than the opening 25k defines the non-illumination portion NL2.

As described above, the smoke layer 23 is disposed on a front surface of the color layer 25 defining the illumination portion AL2 and the non-illumination portion NL2. This allows a background color of the illumination portion AL2 and the non-illumination portion NL2 to be very uniform. This enables the boundary between the illumination portion AL2 and the non-illumination portion NL2 to be very invisible to the user.

Furthermore, the tint of the smoke layer 23 is adjusted so that visible light AA (illustrated in Fig. 8) and visible light NN (illustrated in Fig. 8), which are visible to the user, are similar in color difference to each other during non-illumination. Specifically, referring to Fig. 8, light components which do not pass through the smoke layer 23, i.e., a reflected light component A6 and a reflected light component N6 have the same intensity and tint and a reflected light component A7 and a reflected light component N7 have the same intensity and tint. On the other hand, other light components which pass through the smoke layer 23, i.e., reflected light components (N8, A8, A9, A10, and A11) have different intensities and tints. Accordingly, adjusting the tint of the smoke layer 23 causes the visible light AA and the visible light NN to be similar in color difference to each other. Specifically, the tint of the smoke layer 23 is adjusted so that light obtained by combining the reflected light components A8, A9, A10, and A11 is similar to the reflected light component N8. The smoke layer 23 is adjusted mainly in hue and saturation.

In addition, the tint of the color layer 25 is adjusted so that the visible light AA (illustrated in Fig. 8) and the visible light NN (illustrated in Fig. 8), which are visible to the user, are similar in color difference to each other during non-illumination. Specifically, referring to Fig. 8, the reflected light components A6 and N6 reflected by the front surface 29a of the base 29 have the same intensity and tint and the reflected light components A7 and N7 reflected by the rear surface 29b of the base 29 have the same intensity and tint. On the other hand, the other reflected light components (N8, A8, A9, A10, and A11) have different intensities and tints. Accordingly, controlling the reflected light component N6 reflected by an interface between the smoke layer 23 and the color layer 25 causes the visible light AA and the visible light NN to be similar in color difference to each other. Specifically, the tint of the color layer 25 is adjusted so that light obtained by combining the reflected light components A8, A9, A10, and A11 is similar to the reflected light component N8. The color layer 25 is adjusted mainly in lightness.

Consequently, the color tones of the non-illumination and illumination portions NL2 and AL2 during non-illumination can be close to each other, thus achieving a state in which the outline of the illumination portion AL2 is invisible during non-illumination. In the second embodiment of the present invention, only the display panel PN2 which is whitish and in which a representation pattern is invisible is viewed during non-illumination, whereas the display panel PN2 which is whitish and in which a representation pattern is visible is viewed during illumination.

The smoke layer 23 can be readily formed by applying dimming ink, prepared by mixing pigment, a diffusing agent, acrylic resin, and a solvent, to the entire rear surface 29b of the base 29 with a roll coater, and drying and solidifying the ink.

The color layer 25 can be readily formed by applying dimming ink, prepared by mixing pigment, acrylic resin, and a solvent, to the principal surface 23m of the smoke layer 23 with a screen printing plate, and drying and solidifying the ink.

As illustrated in Figs. 6 and 7, the illumination member SB2 includes the light-emitting light source LE2, the light guide 21 having a light entrance portion 21n through which light from the light-emitting light source LE2 enters, and a scattering member 24 interposed between the light guide 21 and the display panel PN2. The illumination member SB2 is disposed adjacent to a rear surface of the display panel PN2.

The light guide 21 is block-shaped and is composed of light-transmissive acrylic synthetic resin as a base material. Referring to Fig. 6, the light guide 21 is disposed so as to face the display panel PN2 and the scattering member 24 is disposed between the display panel PN2 and the light guide 21 such that the scattering member 24 is positioned so as to correspond to the illumination portion AL2. The light guide 21 has at one end the light entrance portion 21n through which light from the light-emitting light source LE2 enters. Referring to Fig. 7, light La enters through the light entrance portion 21n to propagate through the light guide 21. Light Lb which has propagated through the light guide 21 enters the scattering member 24. Although acrylic resin is used as a synthetic resin material, any other resin, such as polyurethane resin, polycarbonate resin, or silicone resin, may be used.

The scattering member 24 is a film-shaped member having properties of reflecting and scattering light within the member. The scattering member 24 is attached to a surface of the light guide 21 adjacent to the display panel PN2. Thus, as illustrated in Fig. 7, the light Lb which has entered the scattering member 24 is reflected and scattered, and then emerges as the applied light Lf from a front surface (facing in the Y2 direction in Fig. 7) of the scattering member 24. Part of the applied light Lf reaches the opening 25k of the color layer 25, passes through the smoke layer 23 and the base 29, and emerges as the radiated light Lr from the front surface 19a of the base 19. Consequently, when the user at a position in front of the display device 102 views the display device 102, the user can visually identify the radiated light Lr and thus identify a representation pattern illuminated by the light.

As regards the light-emitting light source LE2, a top-emitting type light emitting diode (LED) can be used. The light-emitting light source LE2 is mounted on, for example, a printing wiring board 59. As illustrated in Fig. 6, the light-emitting light source LE2 is positioned so as to face the light entrance portion 21n and a light emitting surface of the light-emitting light source LE2 is directed such that emitted light can enter the light entrance portion 21n.

As described above, in the display device 102 according to the second embodiment of the present invention, the smoke layer 23 disposed on the rear surface 29b of the base 29 of the display panel PN2 allows the background color of the illumination portion AL2 and the non-illumination portion NL2 to be very uniform. This enables the boundary between the illumination portion AL2 and the non-illumination portion NL2 to be very invisible to the user. In addition, the color layer 25, which is not black, disposed on the principal surface 23m of the smoke layer 23 adjacent to the illumination member SB2 allows the reflected light component N3 at the interface between the smoke layer 23 and the color layer 25 in the non-illumination portion NL2 to be visible to the user during non-illumination. Accordingly, adjusting the color tone of the color layer 25 controls the reflected light component N3 at the interface, so that the color tones of the non-illumination and illumination portions NL2 and AL2 which are viewed by the user can be close to each other. In addition, adjusting the color tone of the smoke layer 23 controls light passing through the smoke layer 23, so that the color tones of the non-illumination and illumination portions NL2 and AL2 which are viewed by the user can be closer to each other. Consequently, a state in which the outline of the illumination portion AL2 is invisible during non-illumination can be achieved. Thus, the display device 102 with such a simple configuration that allows a representation pattern in the illumination portion AL2 to be invisible during non-illumination can be provided.

Since the smoke layer 23 has a transmittance greater than or equal to 1%, the applied light Lf passing through the illumination portion AL2 can be increased in amount. Thus, a representation pattern in the illumination portion AL2 is very bright and visible to the user during illumination. If illumination is performed so as to provide constant brightness to be visible, the luminance of the illumination member SB2 to be selected can be set to a low level because the smoke layer 23 has a high transmittance, resulting in power saving of the display device 102.

Since the illumination member SB2 includes the light-emitting light source LE2 and the light guide 21 having the light entrance portion 21n through which light from the light-emitting light source LE2 enters, light from the light-emitting light source LE2 can be efficiently guided to the illumination portion AL2 during illumination. This enables the illumination portion AL2 to be illuminated uniformly, thus increasing the quality of a product including the display device 102.

The present invention is not limited to the above-described embodiments. For example, the present invention can be modified and implemented as follows. Such modifications fall within the technical scope of the present invention.

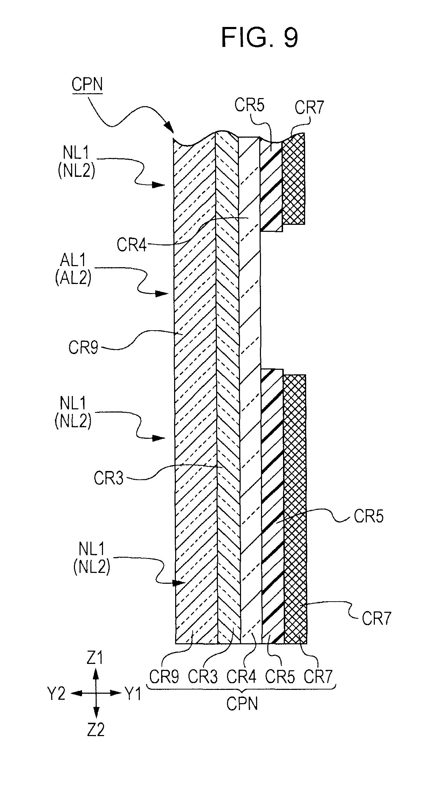

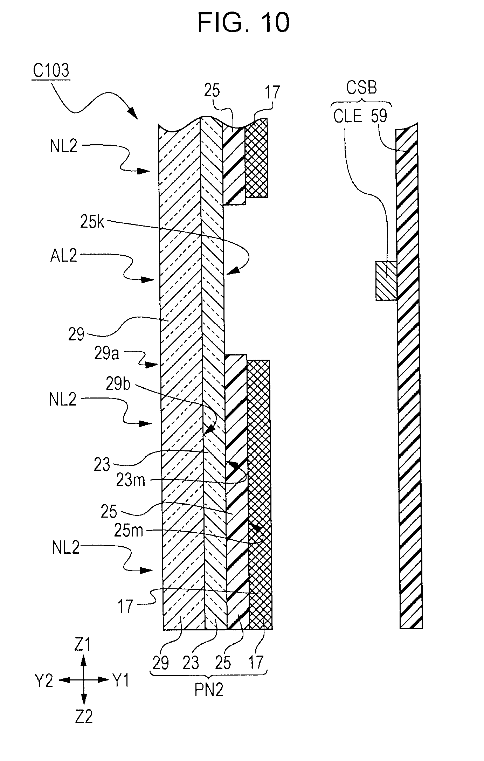

Fig. 9 is a diagram illustrating a display device according to Modification 1 of the embodiments of the present invention and is a sectional structural view of a display panel CPN. Fig. 10 is a sectional structural view illustrating a display device C103 according to Modification 2 of the second embodiment of the present invention.

### <Modification 1>

Although the display panel PN1 is blackish in the above-described first embodiment and the display panel PN2 is whitish in the above-described second embodiment, the color is not limited to a blackish or whitish color. Any other color, for example, a reddish color or a bluish color, may be used. Assuming that the display panel CPN of Fig. 9 is reddish, for example, the display panel CPN may include a base CR9 that is colorless and transmits light, a smoke layer CR3 that is whitish and transmits light, a color layer CR5 that is silverish and blocks light, and a black layer CR7 that is black and blocks light. More preferably, as illustrated in Fig. 9, the display panel CPN further includes a white layer CR4 that is whitish and transmits light such that the white layer CR4 is disposed between the smoke layer CR3 and the color layer CR5, thus increasing the saturation of red color.

### <Modification 2>

Although the display device suitably includes the light guide 21 in the above-described second embodiment, the light guide 21 may be omitted and the display device may include an illumination member CSB including a light-emitting light source CLE for directly illuminating the illumination portion AL2 as illustrated in Fig. 10. Consequently, the illumination portion AL2 can be directly illuminated during illumination, thus allowing a representation pattern to appear more brightly.

### <Modification 3>

Although the display device suitably includes the light guide 21 in the above-described second embodiment, the light guide 21 may be omitted and the display device may include a light-transmissive device, such as a membrane switch, disposed between the display panel PN2 and the light-emitting light source LE2.

### <Modification 4>

Although the display device suitably includes the black layer 17 in each of the above-described embodiments, the black layer 17 may be omitted.

The present invention is not limited to the above-described embodiments and modifications, and can be appropriately modified without departing from an intended scope of the present invention.

### Reference Signs List

- 11, 21: light guide
- 11n, 21n: light entrance portion
- 13, 23, CR3: smoke layer
- 13m, 23m: principal surface
- 15, 25, CR5: color layer
- 15k, 25k: opening
- 15m, 25m: principal surface
- 17, CR7: black layer
- 19, 29, CR9: base
- 19b, 29b: rear surface
- 101, 102, C103: display device
- AL1, AL2, CAL: illumination portion
- LE1, LE2, CLE: light-emitting light source
- NL1, NL2: non-illumination portion
- PN1, PN2, CPN: display panel
- SB1, SB2, CSB: illumination member

## Claims

1. A display device comprising:
a display panel having an illumination portion and a non-illumination portion; and
an illumination member disposed adjacent to a rear surface of the display panel, the illumination member illuminating the illumination portion,
the display panel including a light-transmissive base and a light-transmissive smoke layer disposed on a rear surface of the base adjacent to the illumination member,
the display panel further including a light-shielding color layer disposed on a principal surface of the smoke layer adjacent to the illumination member,
the color layer having an opening for defining the illumination portion.

2. The display device according to Claim 1, wherein the display panel further includes a light-shielding black layer disposed on a principal surface of the color layer adjacent to the illumination member.

3. The display device according to Claim 1, wherein the smoke layer has a transmittance greater than or equal to 1%.

4. The display device according to Claim 1, wherein the illumination member includes a light-emitting light source directly illuminating the illumination portion.

5. The display device according to Claim 1, wherein the illumination member includes a light-emitting light source and a light guide having a light entrance portion through which light from the light-emitting light source enters.
